# EUROPEAN PATENT APPLICATION

(11) **EP 2 196 167 A1**
(43) Date of publication of application: **16.06.2010**
(21) Application number: 08171205.1
(22) Date of filing: 10.12.2008
(51) Int. Cl.: A61C 13/15, A61C 19/00

(54) **Dental light device**

(71) Applicant: 3M Innovative Properties Company, St. Paul, MN 55144-1000 (US)
(72) Inventor: Mueller, Thomas, 81479, Munich (DE); Hartung, Martin, 82205, Gilching (DE)
(74) Representative: Brem, Roland

(57) **Abstract**

A light device for curing a dental composition, comprising a light-source, a housing, a passive heat sink, first and second thermal pathways enabling heat transfer between the light source and the heat sink as well as between the heat sink and the housing. The first thermal pathway is dominated by thermal conduction, and the second thermal pathway is dominated by thermal radiation and thermal convection. The invention helps to provide an inexpensive and compact design of the device.

## Description

### Field of the Invention

The invention relates to a dental light device having a light source, a heat sink and a housing, wherein the light source and the heat sink as well as the heat sink and the housing are thermally coupled by first and second thermal pathways, respectively, that are based on different heat transfer principles.

### Background Art

In dentistry, light hardenable or light curable dental materials are often used in the treatment or restoration of teeth in a patient's mouth. Dental materials of this type are typically initially liquid or pasty so that they can be easily applied to a desired place, and once the materials are placed, can be hardened by exposing them to light of a certain wavelength or color. Dental materials are typically hardenable by blue light. Typically such light-hardenable dental materials are used for filling cavities in teeth, or for securing dental prostheses to teeth, but they are also used for coating and/or sealing tooth surfaces.

Today many different light devices which are typically used to cure light-hardenable materials are available on the market. Generally such light devices have a powerful light source which provides light of an intensity and wavelength required for hardening the dental materials. Because such a light source typically also generates heat during operation, a light device is typically configured to dissipate the heat from the device, or to cool the device, to avoid overheating of the light source and/or to avoid hot surfaces on the device.

There are for example devices in which the heat of the light source is dissipated by help of air cooling, for example by use of a fan. Such devices typically have venting openings so that the heat can be dissipated by air exchange. There are further devices which do not use air cooling, but which use less heat generating light sources.

For example US 2005/0236586 A1 discloses an irradiation device which comprises a single light-emitting unit and a light-conducting unit. The heat produced by the light-emitting unit during operation of the irradiation device is dissipated to a heat sink which further passes the heat to the appliance housing by thermal conduction, from where it is radiated away to the environment.

Although existing devices may provide a variety of advantages it is still a desire to provide a device having a powerful light source, but which is relatively compact, light-weight, inexpensive, and has low power consumption. Furthermore it is desirable that a light device can be easily kept clean. It is further desirable that a light device does not have hot surfaces. An object of the present invention is therefore to provide a light device having at least some advantages over the prior art.

### Summary of the Invention

A first aspect of the invention is directed to a light device for curing a dental composition. The light device comprises a light-source, a housing, a passive heat sink, and a first thermal pathway enabling heat transfer between the light source and the heat sink. In the first thermal pathway thermal conduction dominates over a total of thermal convection and thermal radiation. The passive heat sink is enclosed in the housing, and a second thermal pathway enables heat transfer between the heat sink and the housing. In the second thermal pathway a total of thermal radiation and thermal convection dominates over thermal conduction.

The term "to dominate", within the scope of this invention, refers to "to be the dominant heat transfer mode".

The passive heat sink is preferably hermetically or substantially hermetically enclosed in the housing. Preferably the term "hermetically enclosed" encompasses that the housing is at least free of venting openings, and more preferably free of venting openings which are intended to provide air exchange between the inside of the housing, where the heat sink is located, and the exterior of the device.

A passive heat sink within the scope of this invention preferably serves the purpose of cooling of the light source, or protecting the light source from overheating during operation of the device over a certain time period. The passive heat sink is further preferably a heat sink that operates without an active (for example powered) element, particularly without moving parts, such as a fan. This may make the use of fans, liquid cooling, and/or Peltier elements in the device unnecessary, for example.

Thermal convection, as referred to in this specification, may be provided by natural thermal convection, for example only by natural convection. The thermal convection may also be provided by natural and forced thermal convection, but preferably with the natural thermal convection dominating over the forced thermal convection. This may reduce or eliminate the need for active cooling of the device.

The invention is advantageous in that it allows the use of a powerful light source, for example a High Power LED or halogen lamp, while minimizing the temperature increase of exterior parts of the device. The invention may also provide for a device which has a relatively long time of continuous operation, but in which the temperatures of exterior parts of the device are minimized. The invention is further advantageous in that it allows a light device to be compact and light-weight. The invention also allows the device to be kept clean with only minimal effort. For example, ventilation openings may not be necessary, and thus the device would be less likely to allow undesirable materials to penetrate in spaces of the interior of the device that are not readily accessible for cleaning. Because active cooling elements, like fans and/or Peltier elements, preferably are not be present in a device according to the present invention, the power consumption and noise (generated by fans) may be minimized. Low power consumption may for example allow the operation of the device just from battery capacity alone, and thus may enable for a cordless design of the device. The invention may further allow for using a battery with a minimized capacity, or for using an available battery capacity for a maximized time period of operation of the device.

The first thermal pathway preferably provides a higher thermal conductivity than the second thermal pathway. In this regard "thermal conductivity" relates to the heat quantity which is transferred in a certain time period through the thermal pathway caused by a certain difference between temperatures and both ends of the pathway. The first thermal pathway preferably extends between a surface of the light source and a surface of the passive heat sink, whereas the second thermal pathway preferably extends between a surface of the passive heat sink and a surface of the housing. A thermal pathway within the scope of the present invention may have thermal sub-pathways, for example, may be formed by a series of thermal sub-pathways that together form the thermal pathway. For example the first thermal pathway may comprise a first thermal sub-pathway between a surface of the light source and a surface of a circuit board, and a second thermal sub-pathway between a surface of the circuit board and a surface of the passive heat sink. Further the second thermal pathway may comprise a first thermal sub-pathway between a surface of the passive heat sink and a surface of an intermediate material, and a second thermal sub-pathway between a surface of the intermediate material and a surface of the housing. Thus the device may be adapted such that, based on a certain time period, a first portion of the heat quantity generated by the light source is transferred to the housing, and a second portion of that heat quantity is stored or buffered in the heat sink. Therefore temporarily the heat generated by the light source may be effectively dissipated away from the light source but may be partially retained in the heat sink. Over a certain operation time period of the device this may avoid overheating of the light source, but on the other hand may help to keep the temperature of the housing below a certain maximum temperature.

In one embodiment the first thermal pathway is a "contact thermal pathway" which for the purpose of the present invention is characterized by a surface of the passive heat sink directly or indirectly contacting a surface of the light source. An indirect contact may for example comprise a layer between the heat sink and the light source. Such layer may be for example include an adhesive, and/or a heat-conductive adhesive or agent.

In another embodiment the second thermal pathway is a "proximity thermal pathway" which for the purpose of the present invention is characterized by a surface of the passive heat sink opposing a surface of the housing in a contactless relationship, preferably with the surfaces being spaced from one another at a distance of between 1 mm and 2 mm. The space between the surface of the housing and the surface of the heat sink may have different areas having different distances that in average are between 1 mm and 2 mm.

In a further embodiment the proximity thermal pathway extends over a surface area of the heat sink, which a surface of the housing is opposed to at approximately the distance specified above. The surface area is preferably between about 2000 mm² and about 5000 mm², preferably about 3000 mm². The surface area and the distance between the heat sink and the housing may be selected otherwise and may still result in an equivalent effect.

The proximity thermal pathway may be implemented in that at least the majority of the outer surface of the heat sink is spaced from the housing. In this way the second thermal pathway may be implemented in a way in which a total of thermal radiation and thermal convection dominates over thermal conduction. For example the heat sink may be spaced from the housing, but it may rest at one or more small points or areas of the housing to maintain the relative positions of the two components. The areas at which the heat sink touches the housing preferably provide for a thermal conductivity that is less than the total of thermal radiation and thermal convection provided between the heat sink and the housing. This may be achieved by making the areas where the heat sink touches the housing out of a thermal insulator or by keeping such areas relatively small. Thus separate fixation members, like screws, may be saved which may help minimize the manufacturing costs of the device, while still implementing the concepts of the invention.

In another embodiment the space between the passive heat sink and the housing is substantially entirely filled with a gaseous medium, for example air. This may limit the heat flow from the heat sink toward the housing below a certain level, and keep the temperature of the housing of the device below a certain temperature.

In one embodiment the housing of the device is at least partially made of metal. The housing may particularly be made of stainless steel, for example of steel of the type DIN/ISO 1.4301 (X5 Cr Ni 18-10). However other materials may be possible, like for example aluminum, or other light metals, plastic, and/or ceramic.

In another embodiment the passive heat sink is at least partially made of aluminum, for example Aluminum of the type DIN/ISO 3.3547 (or A1 Cu Mg 4.5 Mn). The aluminum part preferably has a weight of between about 30 grams and 150 grams, and in particular between about 50 grams and 70 grams, and in particular about 54 grams. Thus the heat sink may provide for a relatively high heat capacity. Therefore the heat sink may allow for buffering a relatively large quantity of heat that is not transferred toward the housing. For this reason the device may be operated continuously over a relatively long time period before outer parts of the housing exceed unacceptable temperatures.

The heat sink may be designed to carry electronic circuitry, for example electronic circuitry for controlling the operation of the light device. Therefore separate parts for receiving and fixing of the electronic circuitry may be unnecessary which consequently saves manufacturing costs.

In one embodiment the light device is adapted to switch the light source off when the heat sink reaches a maximum heat sink temperature. The light device may also be adapted to switch into another operation mode when the heat sink reaches the maximum heat sink temperature. Such operation mode may for example reduce the power with which the light source is powered, and/or may indicate to a user that the maximum heat sink temperature has been reached or exceeded. The maximum heat sink temperature may for example be 54 °C.

The light device may be adapted to operate continuously for a normal operation time of at least about 10 minutes. The normal operation time is preferably characterized by the time period the device continuously operates starting from the passive heat sink having room temperature of about 23 °C until the maximum heat sink temperature is reached.

In another embodiment the device may be adapted such that an outside surface of the housing remains below a maximum permissible temperature when the maximum heat sink temperature has reached. The maximum permissible housing temperature is preferably about 48 °C, but may in another example be about 42 °C, when the device is operated in an environment exhibiting a temperature of about 23 °C.

In one embodiment the light source of the light device is a LED, preferably a High Power LED. Such high power LED may have a connection power of between about 3 W and 20 W, and in particular about 8 W with a light output power of about 1.5 W. A light source as it may be used with the present invention is for example the Dental curing LED module DO BDL 8 W M as available from OSRAM GmbH, Germany. However, other light sources like halogen lamps for example may also be used with the present invention. High Power LEDs, which typically can be operated at relatively high temperatures, may be particularly advantageous in use with the current invention. This is because such High Power LEDs may withstand high temperatures and therefore allow for the heat sink to heat up to a relatively high maximum heat sink temperature. Thus the normal operation time can be maximized without exceeding the maximum permissible temperature of the housing.

In one embodiment the light device is a hand-held cordless device. The device may in particular be "pen-shaped", for example not gun shaped. Therefore the overall housing may form a handle that can be gripped by a user for operating the device in a dental treatment. This may particularly be enabled because openings for ventilation are not needed, and yet the housing is maintained below a certain temperature. A compact design of the device may therefore be possible.

Further the device may comprise a switch, a battery and contacts for charging the battery. The switch may be adapted to switch the device on and off, and another switch may be present to switch the device between different operation modes, like different operation times, light intensities and/or light colors.

A second aspect of the invention is directed to a kit of parts. The kit comprises a light device according to the invention, and at least one of an eye protection shield, a light guide, and a charging device.

### Brief Description of Figures

- Fig. 1: is a perspective view of a light device according to an embodiment of the invention;
- Fig. 2: is a cross-sectional view of a device according to an embodiment of the invention;
- Fig. 3: is another cross-sectional view of a device according to an embodiment of the invention;
- Fig. 4: is still another cross-sectional view of a device according to an embodiment of the invention;
- Fig. 5: is a perspective view of a heat sink as it may be used with a device according to an embodiment of the invention;
- Fig. 6: is a different perspective view of the heat sink shown in Fig. 5; and
- Fig. 7: is a diagram indicating a temperature curve of a passive heat sink, and a corresponding temperature curve of a housing of a light device according to the invention.

### Detailed Description of the Figures

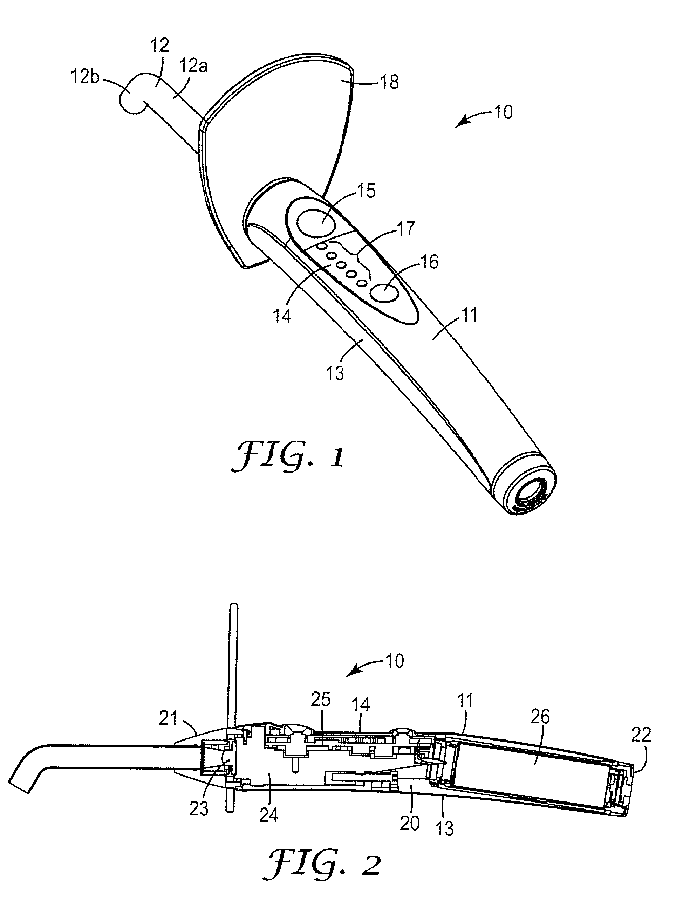

Fig. 1 shows the light device 10 according to a preferred embodiment of the invention. The light device has a housing 11, a light guide 12 and an eye protection shield 18. Such light device may be used to harden a suitable dental composition in a patient's mouth. The illustrated light device 10 is of a type that allows for cordless operation. Therefore the illustrated device has batteries, preferably rechargeable batteries that can be charged via an interface at the device, although a corded device is also within the scope of the present invention.

The light guide 12 comprises an elongated portion 12a and a tip portion 12b. The tip portion 12b is preferably inclined with respect to the elongated portion 12a. Thus the light guide 12 may be particularly adapted for curing a dental composition in a patient's mouth. The eye protection shield 18 is typically configured to block at least some of the light emitted from the device. Therefore the user using the eye protection shield may thus protect his or her eyes from high intensity light emitted from the light device.

The housing 11 of the light device 10 comprises a handle portion 13. The handle portion 13 is formed by a circumferential surface of the housing 11. In the example substantially the entire circumferential surface of the housing 11 forms the handle portion 13. The handle portion 13 normally enables a user to hold the light device 10 during use, for example while a dental composition is hardened in a patient's mouth. The housing 11, and in particular the handle portion 13, comprises a control panel 14. The control panel 14 preferably comprises a start button 15, a select button 16, and a display. The display in the example comprises a plurality of LEDs 17. However other displays are possible, like for example LCD displays. The start button 15 may be used to switch the light device 10 on, for example by pushing and releasing the start button 15. The start button 15 may further be used to switch the light device 10 off, for example by again pushing and releasing the start button 15. The light device may, however, generally switch off automatically after a certain curing time has lapsed, or a certain period of non-use. The curing time may be selectable by the select button 16. For example the select button 16 may be used (for example pushed and released several times) to toggle between various predetermined curing times. The selected curing time is preferably indicated on the display of the device, for example by the LEDs 17 that may be labeled accordingly. The select button 16, or one or more separate buttons, may further be used to select between different light intensities, light colors, or predetermined operation modes which automatically operate the device with different curing times, light intensities, light colors, and/or combinations and/or sequences thereof.

Fig. 2 is a cross-sectional view of the device 10 shown in Fig. 1. The housing 11 in the example is comprised of the handle portion 13 with the control panel 14, a front end 21 and a rear end 22. The housing 11 preferably hermetically seals functional components contained in an inner space 20 of the light device 10. Thus the housing 11 preferably prevents undesired substances from penetrating the device, in particular into the inner space 20. The functional components may thereby be protected from environmental conditions the light device may be exposed to. For example, dust, dirt or substances that may be used for cleaning or disinfecting the device thus may be effectively kept away from the functional components. Therefore a relatively reliable operation of the device may be achieved, and in particular a high level of durability may be achieved. As another advantage the housing 11 may prevent contaminants, for example bacteria, from reaching and accumulating in the interior of the device. Thus in the present invention, such contaminants may at most reach only exterior parts of the device, so cleaning of the device may be facilitated. To achieve the hermetic seal all parts forming the housing are preferably tightly fitted with each other (for example welded, soldered or glued) or assembled with a seal (for example an elastic rubber or silicone seal) or an adhesive arranged therebetween. Any openings in parts forming the housing may be covered and/or plugged by elastic parts (rubber or silicone, for example), by adhesive, or by adhesive tape or labels. Further, openings in the housing 11 may be closed by welding or soldering. An effective hermetic seal may in particular be achieved by a combination of the aforementioned possibilities. The housing 11 also accommodates an interface for attaching the light guide to the housing 11. The interface also has an optical coupling, that is has a light transmissible portion which provides for light generated by the light source of the device to be received in the light guide. An optical coupling as it may be used with the present invention is for example shown in US 2005/236586 A1, cited above.

In the example shown in Fig. 2, the housing 11 hermetically encapsulates a heat sink 24. The housing 11 in the example further hermetically encapsulates a light source 23, a circuit board 25, and a battery 26. However, in other examples at least the heat sink may be accommodated in the hermetically sealed inner space 20, and for example the light source, the circuit board and/or the battery may be arranged partly or entirely outside the inner space 20 (where for example it or they may not be hermetically encapsulated by the housing of the device).

The light source 23 in operation typically generates heat, which builds up inside the device. To avoid high temperatures that may affect the operation of the light source and/or other components, the light device is preferably adapted for transferring heat from inside the light device to outside the light device. Preferably the light device is adapted for transferring heat from inside the light device through the closed housing (or from the hermetically sealed inner space 20) to outside the light device. In particular the light device may be adapted to transfer heat from inside the light device to the exterior without, or substantially without, mass transfer (or transfer of a material from inside the device to outside and/or vice versa), but only, or substantially only, by thermal transfer (for example thermal convection, thermal radiation, and/or thermal conduction). In more particular the housing of the device preferably does not have venting openings providing access to the interior of the device. Further the device preferably does not have a fan other similar appliances providing for forced ventilation.

The light source 23 in the illustrated example is thermally coupled to a passive heat sink 24, and the passive heat sink 24 is preferably thermally coupled to the housing. Thus at least some of the heat that is generated during operation of the light source preferably dissipates into the passive heat sink 24, and from the heat sink toward the housing 11. Thereby overheating of the light source and/or other components of the light device may be reduced or prevented. The first thermal pathway between the light source 23 and the passive heat sink 24 may for example be established by a direct or indirect contact between both parts, so that heat is transferred primarily by thermal conduction. For example the light source 23 may be mounted onto the passive heat sink 24. Thus, the heat may dissipate relatively quickly and efficiently from the light source 23 into the passive heat sink 24. The light source 23 may for example be directly mounted onto the passive heat sink 24, or connected with the passive heat sink 24 via a thermally conductive adhesive or other structural elements. The light source 23 may for example comprise an LED which is mounted on a circuit board, and the circuit board may be connected to the heat sink 24.

In the second thermal pathway between the passive heat sink 24 and the housing 11 a total of thermal radiation and/or passive convection may dominate over thermal conduction. Thus heat received by the heat sink is preferably dissipated relatively slowly and inefficiently towards the housing, and from the housing to the environment. This may help, for example, to keep the temperature of the housing relatively low although the passive heat sink may have a higher temperature. Thereby a heat management is created which preferably allows for quickly dissipating heat away from sensitive components, but avoids emission of heat from the device at temperatures that may be unacceptable or inconveniently for a user. For example surfaces of dental light devices which normally do not have contact to a patient should not have temperatures above 50 °C. Accordingly the device of the example may be adapted to maintain surfaces of the device below 48 °C.

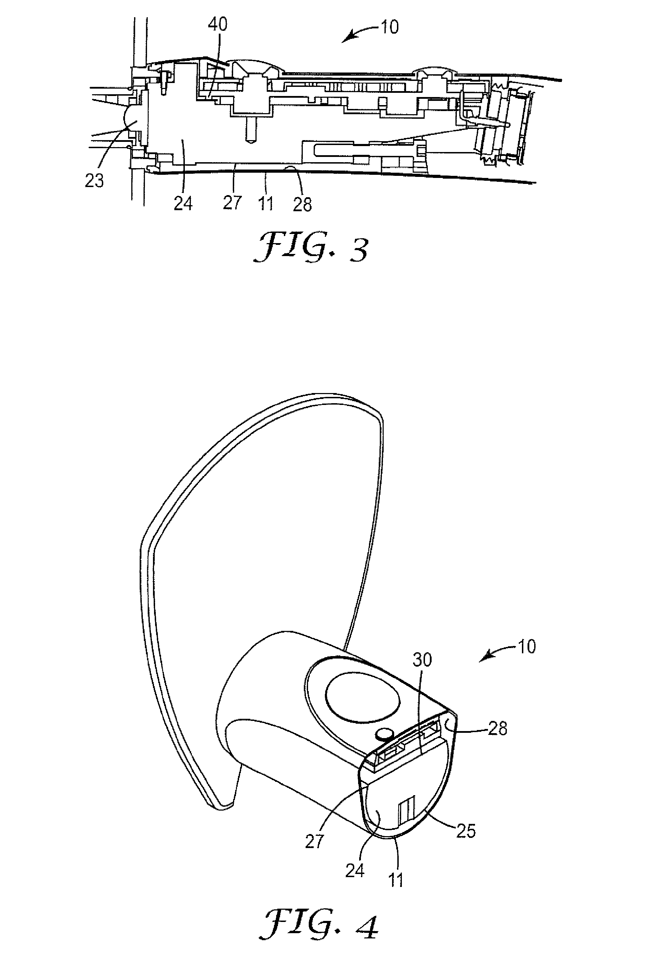

Fig. 3 is an enlarged cross-sectional view of the light device 10, in more detail illustrating the configuration for heat dissipation from the light source 23 toward the housing 11. The passive heat sink 24 has an outer surface 27 (also depicted in Figs. 4, 5 and 6). A portion of the outer surface 27 is arranged opposite of an inner surface 28 of the housing 11 without physically contacting the housing 11, but in close proximity to an inner surface 28 of the housing 11 (see also Fig. 4). In other words, a portion of the outer surface 27 is in contactless proximity of at least part of the inner surface 28 of the housing 11. Thus a predetermined thermal relationship is established between the passive heat sink 24 and the housing 11. Such a thermal relationship preferably corresponds to a "proximity thermal pathway" as specified above.

The passive heat sink 24 may otherwise be in thermal interaction with the housing 11. For example passive heat sink 24 may be guided and/or fixed in the housing 11 so that the second thermal pathway may comprise a contact thermal pathway, but with the proximity thermal pathway dominating the heat transfer. Another part of the second thermal pathway may be formed from radiation and passive convection between portions of the surface 27 and inner surfaces of the housing 11 that are further remote than surfaces forming the proximity thermal pathway. Such further remote surfaces 27, 11 may be spaced at least 2 mm from one another. This thermal pathway is referred to as "remote thermal pathway" within this specification.

However, in the second thermal pathway the heat transfer via the proximity thermal pathway preferably dominates over the heat transfer provided by both the remote thermal pathway together with the contact thermal pathway.

The proximity thermal pathway is preferably implemented by contactless opposing surfaces spaced from each other at a distance less than about 2 mm, preferably between 1 mm and 2 mm. The space is preferably filled with only, or substantially only, air at about standard atmospheric pressure. The area of surfaces forming the proximity thermal pathway is preferably more than 1000 mm², and preferably more than 2000 mm². Preferably the area of surfaces forming the proximity thermal pathway is between about 1500 mm² and about 5000 mm², more preferably between about 2500 mm² and 3500 mm², and preferably about 3000 mm².

Fig. 4 shows a sectional view of the device 10, with the heat sink 24 and the housing 11. A generally U-shaped cross-sectional space between surface 28 of the housing 11 and surface 27 of the heat sink is depicted by reference 25. Surfaces 27, 28 are spaced away from each other at a distance of about 1.5 mm to 2.5 mm, thus forming a proximity thermal pathway. Surface 30 is further spaced away from surfaces of the housing and therefore forms a remote thermal pathway with the housing. Preferably the device 10 has a relatively thinwalled housing. This may for example provide for a relatively light weight of the device. However, a thin wall may also provide a relatively low heat capacity of the housing. The housing may comprise walls that are between about 0.2 mm to 0.8 mm thick, for example at least walls forming surfaces that are in proximity thermal pathway with surfaces of the heat sink. The housing is preferably made of stainless steel as specified above.

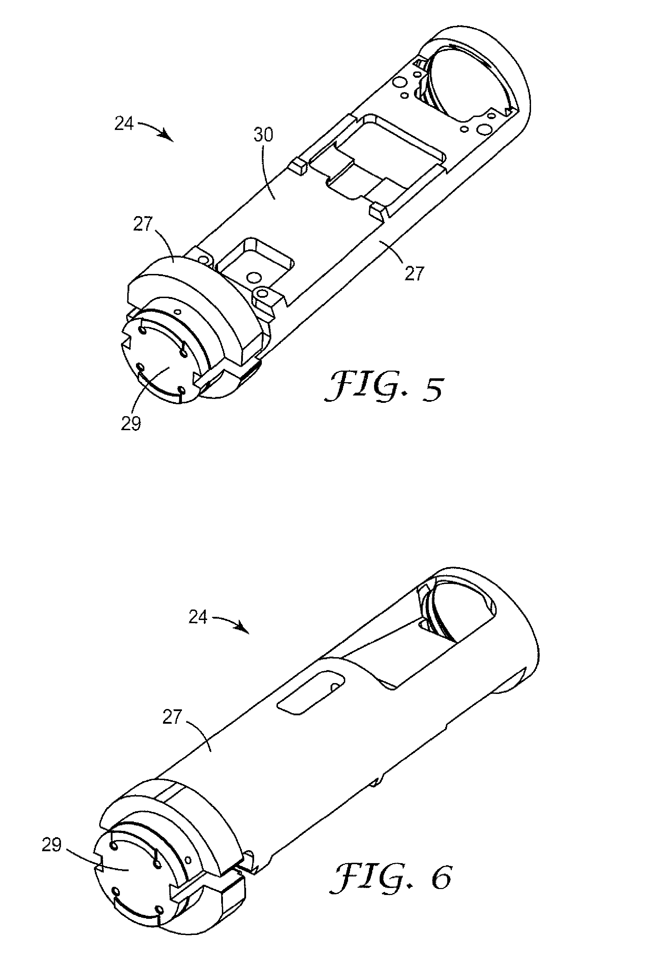

Fig. 5 and Fig. 6 show in a top view (Fig. 5) and a bottom view (Fig. 6) the passive heat sink 24 in more detail. The passive heat sink 24 has an overall outer surface 27 which comprises an adaptor surface 29 for receiving the light source (not shown). The passive heat sink 24 is also functionally shaped to receive and/or to cooperate with other components of the light device. For example the passive heat sink 24 has a functional recess 30 which is adapted to receive a circuit board with components for controlling the light device. The passive heat sink 24 is further configured to provide a relatively large heat capacity. Heat may therefore accumulate in the passive heat sink to compensate for or buffer the relative quick transfer of heat between the light source and passive heat sink, and the relative slow transfer of heat between the passive heat sink and the housing. Therefore the light device may permit long periods of operation before the housing reaches unacceptable or inconvenient temperatures for the user.

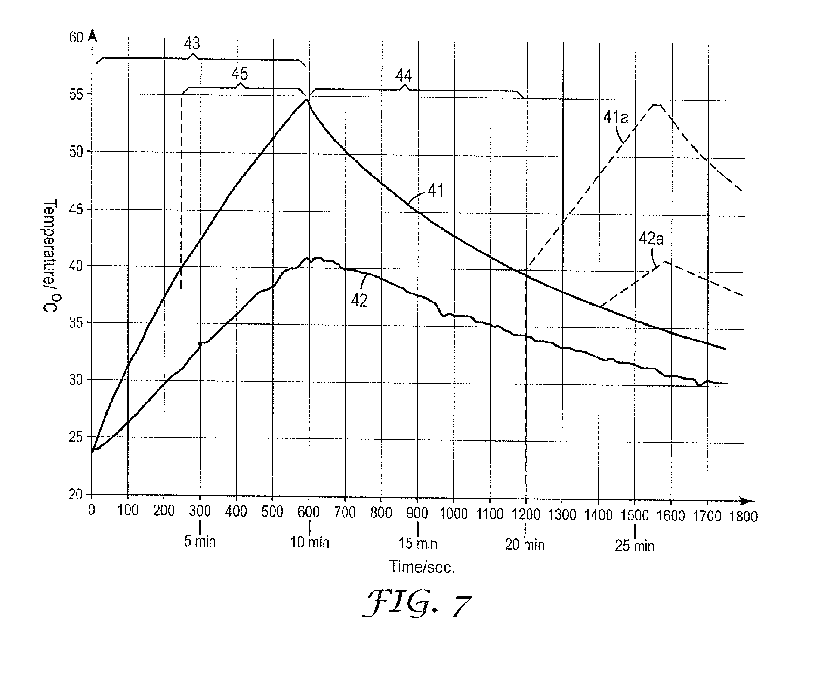

The light device has preferably a temperature monitoring sensor 40 (indicated in Fig. 3) which monitors the temperature of the heat sink. The device is preferably adapted to switch off the device if the temperature measured by the monitoring sensor is at about a maximum heat sink temperature of about 55 °C. Thereby warming up of the housing, or the light source or battery, above the maximum permitted respective temperature may be prevented. In particular thereby the housing may not heat up over about 42 ° in an operation mode as illustrated in Fig. 7, and may not heat up over about 48 °C in any other operation mode.

The device preferably also is adapted to provide a warning signal to the user if the temperature measured by the monitoring sensor is above a predetermined threshold temperature. The device, by indicating that the device will soon switch off, thereby helps a user to prepare in due time prior to shut-off. Further, the device may be adapted to prevent the device from being switched on if the temperature measured by the monitoring sensor is above the predetermined threshold temperature. This may help to ensure that the device can only be switched on when it still has enough capacity to run the device for a preselected operating time.

Fig. 7 shows a diagram indicating a temperature curve 41 of a passive heat sink, and a corresponding temperature curve 42 of a housing of a light device according to the invention. The temperature data have been obtained from operating the light device, and measuring the temperatures of the passive heat sink and the housing. The temperature of the heat sink was measured at the area 40 indicated in Fig. 3 by a first temperature sensor. The temperature of the housing was measured by a second temperature sensor. The first and second temperature sensors were connected to a recording device that was setup to record the data provided by the first and second temperature sensors over time.

At the time "0" (on the time axis) the light device according to the invention was switched on. At this point of time the passive heat sink and the housing had about the same temperature, namely a temperature of about 24 °C. The temperature of the heat sink increases in operation of the device as indicated by curve 41. In contrast the temperature increase of the housing as indicated by curve 42 lags behind the heat sink temperature by a certain time constant. Therefore at least within a time period of about 10 minutes from the point "0" the housing temperature generally stays lower than about 42 °C while the heat sink temperature increases up to about 55 °C. The light device automatically switched off when the heat sink temperature reached 55 °C. The time during which the light device continuously operates between switching on and automatically switching off is referred to in this specification as "available operation time". The available operation time based on the heat sink and the housing initially having room temperature of about 23 °C is referred to in this specification as "normal operation time". Further referring to Fig. 7, curves 41 and 42 show that over at least the normal operation time period the heat sink and housing temperatures diverge. Therefore the difference between the heat sink temperature and the housing temperature increases, or continuously increases, over at least the normal operation time. During the normal operation time the temperature of the heat sink increased by about 31 °C, and the housing temperature increased by about 18 °C.

From the point in time the device has switched off the heat sink and housing cooled down. Within another time period of 10 minutes the heat sink temperature decreased to about 40 °C which corresponds to a temperature decrease of about 15 °C. Thus the temperature decrease of the heat sink within 10 minutes cooling time is about half of the previous temperature increase (31 C°) within 10 minutes normal operation time. Similarly the housing temperature decreased to about 33 °C which corresponds to a temperature decrease of about 9 °C. Thus also the temperature decrease of the housing within 10 minutes cooling time is about half of the previous temperature increase (31 C°) within 10 minutes normal operation time.

The light device with the heat sink now having a temperature of about 40 °C and the housing having a temperature of about 33 °C may be switched on again as indicated by curves 41a and 42a. The available operation time (indicated by reference 45) now is about 5 minutes. The light device then switches off again, however may be available for another 5 min after about 10 minutes cooling. Thus an advantage of the device is a relatively long normal operation time. Further the device relatively quickly recovers a new relatively long available operating time.

## Claims

1. A light device for curing a dental composition, comprising:
- a light-source;
- a housing;
- a passive heat sink;
- a first thermal pathway enabling heat transfer between the light source and the heat sink, wherein in the first thermal pathway thermal conduction dominates over a total of thermal convection and thermal radiation;
- the passive heat sink being substantially hermetically enclosed in the housing; and
- a second thermal pathway enabling heat transfer between the heat sink and the housing, wherein in the second thermal pathway a total of thermal radiation and thermal convection dominates over thermal conduction.

2. The light device of claim 1, wherein the first thermal pathway comprises contact thermal pathway **characterized by** a surface of the passive heat sink directly or indirectly contacting a surface of the light source.

3. The light device of claim 1 or 2, wherein the second thermal pathway comprises proximity thermal pathway **characterized by** a surface of the passive heat sink opposing a surface of the housing in a contactless relationship with the surfaces being spaced from one another at an average distance of between 1 mm and 2 mm.

4. The light device of claim 3, wherein the proximity thermal pathway extends over a surface area of the heat sink of about 3000 mm² which is opposed to a surface of the housing.

5. The light device of claim 3 or 4, wherein at least the majority of outer surface of the heat sink is spaced from the housing.

6. The light device of any of the preceding claims, wherein the housing is made at least partially of metal.

7. The light device of any of the preceding claims, wherein the passive heat sink is at least partially made of aluminum with the aluminum part having a weight of between about 30 grams and 150 grams.

8. The light device of any of the preceding claims, being adapted to switch the light source off when the heat sink reaches a maximum temperature.

9. The light device of claim 8, wherein the maximum heat sink temperature is about 55 °C.

10. The light device of claim 8 or 9, being adapted to operate for a normal operation time of at least about 10 minutes, the normal operation time being **characterized by** the time period the device continuously operates starting from the passive heat sink having room temperature of about 23 °C until the maximum permitted temperature is reached.

11. The light device of any of the claims 8 to 10, being adapted such that a maximum temperature on an outside surface of the housing may be less than about 48 °C when the maximum permitted heat sink temperature has been reached.

12. The light device of any of the preceding claims, wherein the light source is a LED having a connection power of about 8 W.

13. The light device of any of the preceding claims, being a hand-held cordless device.

14. The light device of any of the preceding claims, further comprising a switch, a battery and contacts for charging the battery.

15. A kit of parts, comprising a light device according to any of the claims 1 to 14, and at least one of an eye protection shield, a light guide, and a charging device.
